# EUROPÄISCHE PATENTSCHRIFT

(11) **EP 0 497 214 B1**
(45) Veröffentlichungstag und Bekanntmachung des Hinweises auf die Patenterteilung: **09.08.1995**
(21) Anmeldenummer: 92101109.4
(22) Anmeldetag: 24.01.1992
(51) Int. Cl.: B01D 53/00

(54) **Biofilter und Verfahren zu seiner Herstellung**
Bio-filter and the manufacture thereof
Bio-filtre et sa fabrication

(30) Priorität: 30.01.1991 CH 277/91
(43) Veröffentlichungstag der Anmeldung: 05.08.1992
(73) Patentinhaber: OTTO LUFT- und KLIMATECHNIK GmbH & Co. KG, 57319 Bad Berleburg (DE)
(72) Erfinder: Fattinger, Volker, CH-4144 Arlesheim (CH)
(74) Vertreter: Katscher, Helmut, Dipl.-Ing.

(56) Entgegenhaltungen:
- EP-A- 0 076 898
- EP-A- 0 142 872
- EP-A- 0 240 929
- EP-A- 0 414 095
- FR-A- 2 278 382

## Beschreibung

Die Erfindung betrifft einen Biofilter zur Abluft- oder Abgasreinigung durch biologische Oxidation mit mindestens einer gasdurchströmten Schicht von porösen Füllkörpern als Trägermaterial für Mikroorganismen, wobei die Füllkörper teilweise aus porösem hydrophilen Material bestehen.

Es ist bekannt, Schadstoffe aus Abluft oder Abgas durch Mikroorganismen - zumeist Bakterien, aber auch Pilze oder Hefen - biologisch zu CO₂ und H₂O zu oxidieren. Die Mikroorganismen können z.B. durch Zumischen von Belebtschlamm einer Abwasserkläranlage in die gasdurchlässige Filterschicht gebracht werden. Als Füllmaterial werden beispielsweise Torf, Reisig, Kompost, Heidekraut, aber auch Aktivkohle, Styropor, Gasbeton und anderes körniges oder faseriges Material verwendet.

Dabei ist es bekannt inaktives Material oder auch Füllkörper (z.B. kleine Kugeln) zuzumischen um den Gaswiderstand in der Filterschicht zu vermindern und um eine bessere Verteilung des Gasstromes im durchströmten Querschnitt zu erreichen.

Gemäss der B.R.D. Offenlegungsschrift 24 34 297 (Anmeldetag 17.07.74) ist es bekannt als Filtermaterial zur Luftfilterung eine körnige Mischung aus Aktivkohle und Gasbeton zu verwenden.

Mit Biofiltern, bestehend aus einer feuchten Mischung aus Kompost, Gasbeton, Aktivkohle und Styropor-Kugeln (Durchmesser ca. 4 mm) können z.B. bei 25 °C pro m³ Filtervolumen 30 - 50 g pro Stunde organische Substanz abgebaut werden. Dieser Wert bezieht sich auf Lackverdünner, wie Toluol (max. 4 g/m³), Butylacetat (max. 1,8 g/m³) und Butanol (max. 1 g/m³).

Zur Besiedlung der Filtermasse mit Mikroorganismen wurde Belebtschlamm aus einer Abwasserkläranlage zugemischt. Es dauert etwa drei Wochen, bis sich die Mikroorganismen adaptieren und die genannte Leistung von 30 - 50 g pro m³ und Stunde erbringen.

Es ist bekannt (FR-A-2 278 382), eine lose körnige Mischung aus Aktivkohle und Gasbeton für ein Filterbett eines Luftfilters zu verwenden. Dabei handelt es sich aber nicht um ein Biofilter.

Bei einem bekannten Biofilter (EP-A-0 142 872) besteht das Filterbett aus einer Mischung von biologisch aktivem Material, wie Kompost, und porösem Material, wie Aktivkohle.

Bei einem anderen bekannten Biofilter (EP-A-0 414 095) dient als Filterbett eine Mischung aus unterschiedlichen Substanzen, darunter auch Aktivkohle, Gasbeton, Kompost oder Klärschlamm.

Schließlich ist es bei einem Biofilter der eingangs genannten Gattung bekannt (EP-A-240 929), für die gasdurchströmte Filterschicht poröse Füllkörper zu verwenden, die jeweils aus einem Gemisch von Kunststoff und Aktivkohle durch Sintern geformt sind. Die hydrohobe Aktivkohle ist dabei in ein Grundgerüst aus hydrophilem Kunststoff eingebettet. Der Schadstofftransport aus der Luft in die hydrophobe Schicht und letztlich an die Oberfläche der Mikroorganismen ist dabei verhältnismäßig langsam.

Aufgabe der Erfindung ist es daher, ein Biofilter der eingangs genannten Gattung so auszubilden, daß die Abbauleistung an Schadstoffen wesentlich gesteigert wird.

Diese Aufgabe wird erfindungsgemäß dadurch gelöst, daß die Füllkörper jeweils einen Kern aus dem hydrophilen Material aufweisen, auf dessen Oberfläche eine dünne Schicht aus hydrophobem Material mit einem Bindemittel aufgebracht ist.

Vorteilhafte Ausgestaltungen der Erfindung sind Gegenstand von abhängigen Ansprüchen.

Es wurde gefunden, dass man den Abbau auf Werte über 150 g pro m³ und Stunde steigern kann, wenn man körniges Material aus einem porösen Stoff - wie Gasbeton, Blähton oder Bimsstein - zumischt, dessen Oberfläche mit Aktivkohle oder Adsorptionsharzpulver beschichtet ist. Anstelle von körnigem Material können auch speziell geformte Füllkörper - wie Ringe oder Sättel - verwendet werden.

Mit einem körnigem Material im Grössenbereich 2 - 8 mm, an dessen Oberfläche eine dünne Schicht Aktivkohle haftet, kann man über 1'000 m² Oberfläche pro m³ Füllmaterial bereitstellen, welche Schadgase - wie Toluol, Xylol, Aethylacetat, Benzin, usw. - adsorbiert.

Der Hydrophile Kern entzieht der Kohleschicht Wasser und fördert damit die Aufnahme von Lösungsmittel dämpfen durch die Aktivkohle. In den Poren des hydrophilen Kernes entwickeln sich Mikroorganismen,w elche durch Diffusion mit den adsorbierten organischen Stoffen versorgt werden. Die Porosität sichert den Zutritt von Luftsauerstoff, sodass optimale Bedingungen für die biologische Oxidation erreicht werden.

Anstelle von Aktivkohle kann als Mittel zur Beschichtung der Oberfläche auch ein Adsorptionsharz angewandt werden.

Entscheidend ist das Bereitstellen grosser Kontaktflächen zwischen hydrophoben und hydrophilen Stoffen. Von positivem Einfluss ist auch die ausgleichende Wirkung der hydrophoben Schicht bei schwankenden Schadstoffkonzentrationen.

Es ist von Vorteil, die Poren der hydrophilen Körner (oder der geformten Füllkörper) mit Mirkoorganismen zu impfen, bevor die hydrophobe Schicht (insbesondere Aktivkohle) aufgetragen wird. Es ist möglich, Mikroorganismen mit spezieller Eignung zum Abbau bestimmter organischer Stoffe in Form einer wässrigen Aufschlämmung mit den porösen Körnern zu vermischen. In den meisten Fällen genügt es aber, z.B. Belebtschlamm einer Kläranlage, verdünnt mit Wasser, zum Befeuchten anzuwenden.

Nach dem Aufbringen der hydrophoben Schicht - z.B. Aktivkohle - und nach einigen Wochen des Einsatzes im Biofilter vermehren sich jene Arten von Mikroorganismen, die in der Lage sind, die in der Aktivkohlehülle der Körner adsorbierten Schadstoffe biologisch zu oxidieren. Dabei werden z.B. Kohlenwasserstoffe zu CO₂ und H₂O abgebaut.

Beim Aufbringen der hydrophoben Oberfläche - z.B. aus Aktivkohle - wird ein Bindemittel benutzt. Dadurch vermindert sich die Porosität der Oberflächenschicht.

Es ist von Vorteil, der hydrophoben Schicht z.B. ein Karbonat (CaCO₃ oder MgCO₃) zuzusetzen. Leichtes Ansäuern nach dem Abbindevorgang des Haftmittels entwickelt CO₂ und bewirkt Poren in der hydrophoben Aussenschicht.

Gut geeignet als hydrophobes Material in der Aussenschicht ist pulverförmige Aktivkohle.

Wie bereits dargelegt, werden die porösen, hydrophilen Körner mit Mikroorganismen besiedelt.

Es ist von Vorteil, auch die Zwischenräume der Körner mit einem Material zu versehen, welches als Nährboden für Mikroorganismen geeignet ist (z.B. Kompost oder Torf).

Die von der hydrophoben Schicht (z.B. Aktivkohle) adsorbierten Schadstoffe werden dann von beiden Seiten durch Diffusion den Mikroorganismen zugeführt.

Eine optimale biologische Oxidation erfordert einen hohen Wassergehalt der gasdurchströmten Schicht. Die Zufuhr von Wasser erfolgt zum Teil durch Befeuchten des Eintrittsgases. Diese Befeuchtung reicht in vielen Fällen nicht aus, weil die exotherme biologische Oxidation das Gas erwärmt, und Wasser aus der körnigen Schicht verdampft.

Zur Regelung des Wassergehaltes kann die Schicht besprüht werden. Als Sprühflüssigkeit kann auch schadstoff-haltiges Wasser benutzt werden, um Schadstoffe dermassen einer biologischen Oxidation in der Schicht zuzuführen.

Der Gaswiderstand einer gasdurchströmten Schicht nimmt zu mit höherem Wassergehalt. Es ist vorteilhaft. die Häufigkeit und die Menge der Besprühung nach dem Gaswiderstand oder der spezifischen Gasdurchtrittsmenge (m³/m²/h) zu steuern.

Wie erwähnt, können der hydrophoben Aussenhaut der Körner Karbonate zugesetzt werden. Das Ansäuern zum Zwecke der CO₂-Entwicklung (Porenbildung) kann z.B. mit Phosphorsäure ausgeführt werden. Stöchiometrisch wird dabei weniger H₃PO₄ verwendet als dem Karbonatgehalt entspricht. Es bildet sich dabei ein pH-Puffersystem.

Zu grobe, beschichtete Körner vermindern die gasumströmte Oberfläche. Zu kleine Körner halten zuviel Wasser in den Zwischenräumen fest und behindern eine homogene Gasströmung durch den Querschnitt des Biofilters. Besonders geeignet ist eine Korngrösse zwischen 2 und 25 mm.

### Beispiel zur Herstellung eines mit Aktivkohle beschichteten körnigen Materials

Als poröses Material wird Silikalzit der Firma YTONG AG, Hornstrasse 3, D-8000 München 40, verwendet (Schüttdichte 300 kg/m³, Sieblinie 5,6-14 mm). 1 m³ Silikalzit wird mit 50 Liter Belebtschlamm aus einer Abwasserkläranlage und 200 Liter Wasser in einer Drehtrommel durchmischt. Bereitgestellt wird ein trockenes Pulvergemisch bestehend aus
50 kg pulverförmiger Aktivkohle (CHEMVIRON Carbon, Typ A)
50 kg Dolomitmehl
40 kg Zement.

Dieses Pulvergemisch wird relativ rasch (in weniger als zwei Minuten) den in der Trommel sich bewegenden, feuchten Silikalzitkörnern zugemischt. Nach Lagerung von ca. drei Tagen werden die schwarzen Körner mit 80 Liter Flüssigkeit durchmischt. Die Flüssigkeit enthält
4 kg Phosphorsäure (als 100 % H₃PO₄ gerechnet) und
4 kg Ammoniumphosphat (NH₄)₂HPO₄.

Vor der Verwendung in einem Biofilter kann dem körnigem Material weiterer Belebtschlamm und gesiebter Kompost zugemischt werden.

## Patentansprüche

1. Biofilter zur Abluft- oder Abgasreinigung durch biologische Oxidation mit mindestens einer gasdurchströmten Schicht von porösen Füllkörpern als Trägermaterial für Mikroorganismen, wobei die Füllkörper teilweise aus porösem hydrophilen Material bestehen, dadurch gekennzeichnet, daß die Füllkörper jeweils einen Kern aus dem hydrophilen Material aufweisen, auf dessen Oberfläche eine dünne Schicht aus hydrophobem Material mit einem Bindemittel aufgebracht ist.

2. Biofilter nach Anspruch 1, dadurch gekennzeichnet, daß das hydrophile Material für den Kern Gasbeton, Blähton oder Bimsstein ist.

3. Biofilter nach Anspruch 1, dadurch gekennzeichnet, daß das hydrophobe Material für die dünne Schicht Aktivkohle oder Adsorptionsharz ist.

4. Biofilter nach Anspruch 1, dadurch gekennzeichnet, daß die gasdurchströmte Schicht neben den porösen Füllkörpern als Nährboden für Mikroorganismen geeignetes Material enthält, vorzugsweise Torf oder Kompost.

5. Biofilter nach Anspruch 1, dadurch gekennzeichnet, daß die Füllkörper eine Korngröße zwischen 2 und 25 mm aufweisen.

6. Verfahren zur Herstellung eines Biofilters nach einem der Ansprüche 1 bis 5, dadurch gekennzeichnet, daß die aus hydrophilem Material bestehende poröse Kerne der Füllkörper mit Mikroorganismen beladen werden, bevor die Oberfläche mit hydrophobem Material beschichtet wird.

7. Verfahren nach Anspruch 6, dadurch gekennzeichnet, daß die hydrophobe Schicht einen beim Ansäuern ein Gas entwickelnden Stoff enthält und daß die Porosität der hydrophoben Schicht durch Ansäuern erhöht wird.

8. Verfahren nach Anspruch 7, dadurch gekennzeichnet, daß die hydrophobe Schicht CaCO₃ oder MgC0₃ enthält.

9. Verfahren nach Anspruch 7, dadurch gekennzeichnet, daß zum Ansäuern eine H₃PO₄-haltige Flüssigkeit verwendet wird.

10. Verfahren zum Betreiben eines Biofilters nach einem der Ansprüche 1-5, dadurch gekennzeichnet, daß der Feuchtigkeitsgehalt der gasdurchströmten Schicht durch Besprühen mit Wasser oder einer wasserhaltigen Flüssigkeit in der Weise geregelt wird, daß die Menge und/oder die Häufigkeit der Besprühung in Abhängigkeit vom Gaswiderstand der gasdurchströmten Schicht und/oder von der spezifischen Gasdurchtrittsmenge gesteuert wird.

## Claims

1. Biofilter for cleaning of exhaust air or waste gas by biological oxidation with at least one layer, through which the gas flows, of porous fillings as a carrier material for microorganisms, the fillings comprising partly a porous, hydrophilic material, characterized in that the fillings have in each case a nucleus of the hydrophilic material, on the surface of which a thin layer of hydrophobic material with a bonding agent is applied.

2. Biofilter according to Claim 1, characterized in that the hydrophilic material for the nucleus is gas concrete, foamed clay or pumice.

3. Biofilter according to Claim 1, characterized in that the hydrophobic material for the thin coating is activated carbon or adsorption resin.

4. Biofilter according to Claim 1, characterized in that the layer through which the gas flows, in addition to the porous fillings, contains suitable material as a substrate for microorganisms, preferably peat or compost.

5. Biofilter according to Claim 1, characterized in that the fillings have a grain size between 2 and 25 mm.

6. Method for the production of a biofilter according to one of Claims 1 to 5, characterized in that the porous nuclei of the fillings, which consist of hydrophilic material, are loaded with microorganisms before the surface is coated with hydrophobic material.

7. Method according to Claim 6, characterized in that the hydrophobic coating contains a substance which develops a gas when acidified and that the porosity of the hydrophobic layer is increased by acidification.

8. Method according to Claim 7, characterized in that the hydrophobic layer contains CaCO₃ or MgCO₃.

9. Method according to Claim 7, characterized in that a liquid containing H₃PO₄ is used for acidification.

10. Method for operating a biofilter according to one of Claims 1 - 5, characterized in that the moisture content of the layer through which the gas flows is controlled by spraying with water or a liquid containing water in such a manner that the amount and/or the frequency of spraying is controlled as a function of the gas resistance of the layer through which the gas flows and/or of the specific amount of gas passing through it.

## Revendications

1. Filtre biologique pour l'épuration d'air vicié ou de gaz brûlés par oxydation biologique, comportant au moins une couche de corps de garnissage poreux parcourue par un gaz comme matière de support pour les micro-organismes, les corps de garnissage étant constitués en partie d'une matière hydrophile poreuse, caractérisé en ce que les corps de garnissage présentent respectivement un noyau constitué de la matière hydrophile, à la surface duquel une couche mince constituée d'une matière hydrophobe est appliquée avec un agent liant.

2. Filtre biologique selon la revendication 1, caractérisé en ce que la matière hydrophile du noyau est constituée de béton cellulaire, d'argile expansée ou de pierre ponce.

3. Filtre biologique selon la revendication 1, caractérisé en ce que la matière hydrophobe de la couche mince est constituée de charbon activé ou d'une résine d'adsorption.

4. Filtre biologique selon la revendication 1, caractérisé en ce que la couche parcourue par le gaz contient, outre les corps de garnissage poreux, une matière appropriée comme milieu nutritif pour les micro-organismes, en particulier de la tourbe ou du compost.

5. Filtre biologique selon la revendication 1, caractérisé en ce que les corps de garnissage ont une granulométrie comprise entre 2 et 25 mm.

6. Procédé de fabrication d'un filtre biologique selon l'une quelconque des revendications 1 à 5, caractérisé en ce que les noyaux poreux de matière hydrophile des corps de garnissage sont chargés de micro-organismes avant que leur surface ne soit revêtue de matière hydrophobe.

7. Procédé selon la revendication 6, caractérisé en que la couche hydrophobe contient une substance dégageant un gaz par acidification et la porosité de la coucha hydrophobe est élevée par acidification.

8. Procédé selon la revendication 7, caractérisé en ce que la couche hydrophobe contient du CaCO₃ ou du MgCO₃.

9. Procédé selon la revendication 7, caractérisé en ce que l'on utilise un liquide contenant du H₃PO₄ pour acidifier.

10. Procédé d'exploitation d'un filtre biologique selon l'une quelconque des revendications 1 à 5, caractérisé en ce que la teneur en humidité de la couche traversée par le gaz est réglée par pulvérisation d'eau ou d'un liquide contenant de l'eau de manière que la quantité et/ou la fréquence de la pulvérisation soient commandées en fonction de la résistance au gaz de la couche traversée par le gaz et/ou de la quantité de passage spécifique du gaz.
